# NEUE EUROPÄISCHE PATENTSCHRIFT

(11) **EP 2 653 794 B2**
(45) Veröffentlichungstag und Bekanntmachung des Hinweises auf die Entscheidung über den Einspruch: **26.06.2019**
(45) Hinweis auf die Patenterteilung: 29.06.2016
(21) Anmeldenummer: 13163342.2
(22) Anmeldetag: 11.04.2013
(51) Int. Cl.: F24D 19/00, F16L 9/22, F16L 43/00, F16L 41/00, F16L 47/32, F16L 41/03

(54) **Rohrverbinder**
Pipe connector
Raccordement de tuyau

(30) Priorität: 16.04.2012 DE 102012103260
(43) Veröffentlichungstag der Anmeldung: 23.10.2013
(73) Patentinhaber: Viega Technology GmbH & Co. KG, 57439 Attendorn (DE)
(72) Erfinder: Hantke, Christopher, 57489 Drolshagen-Germinghausen (DE); Meissner, Kai-Michael, 57223 Kreuztal (DE); Sinoplu, Sudi, 57439 Attendorn (DE)
(74) Vertreter: Cohausz & Florack

(56) Entgegenhaltungen:
- EP-A1- 0 315 796
- WO-A1-2011/066612

## Beschreibung

Die vorliegende Erfindung betrifft einen Rohrverbinder für eine Hausinstallation mit einem Gehäuse und mit mindestens einer mit einem Fluid durchströmbaren Rohrleitung, wobei das Gehäuse aus Kunststoff besteht und wobei an den Enden der mindestens einen Rohrleitung Anschlüsse für die Verbindung mit weiteren Rohrleitungen vorgesehen sind, wobei das Gehäuse mindestens zwei Gehäuseteile aufweist, wobei der erste Gehäuseteil einen unteren Rohrleitungsabschnitt der mindestens einen Rohrleitung aufweist, wobei der zweite Gehäuseteil einen oberen Rohrleitungsabschnitt der mindestens einen Rohrleitung aufweist, wobei der untere Rohrleitungsabschnitt und/oder der obere Rohrleitungsabschnitt der mindestens einen Rohrleitung mindestens einen Eckbereich aufweist, wobei in dem mindestens einen Eckbereich eine Ausrundung vorgesehen ist, wobei mindestens eine weitere Rohrleitung vorgesehen ist, und wobei die erste Rohrleitung die mindestens eine weitere Rohrleitung in einem Kreuzungsbereich kreuzt. Ferner betrifft die Erfindung die Verwendung eines Rohrverbinders in einem Trinkwasser-, Heizungs- oder Kühlsystem.

Rohrverbindungssysteme für die Hausinstallation, insbesondere für Heizungssysteme, werden üblicherweise aus Rotguss hergestellt. Neben Rohrverbindern, die zwei Leitungen miteinander verbinden, sind auch Systeme mit vier Anschlüssen bekannt, die beispielsweise als Verbindungsstück von sich kreuzenden Rohrleitungen eingesetzt werden. Rotguss ist jedoch teuer in der Herstellung und hat darüber hinaus den Nachteil, dass die Herstellung eines Bauteils, die üblicherweise im Gussverfahren erfolgt, aufgrund des hohen Kupfergehaltes von Rotguss sehr aufwändig ist.

Die DE 2 412 303 betrifft einen Rohrleitungs-Verteilerkörper für Heizungsanlagen, der wahlweise für Einrohr- oder Zweirohr-Zentralheizungsanlagen verwendet werden kann. Ein Einsatz, der in den Rohrverteiler eingebaut werden kann, trennt zwei Rohrleitungen in dem Bereich, in dem diese sich kreuzen. Dieser Rohrverteiler hat jedoch den Nachteil, dass er einerseits sehr aufwändig in der Herstellung ist. Andererseits tritt im Kreuzungsbereich eine Rohrverengung auf, die einen deutlichen Strömungsverlust verursacht.

Neben Verbindungsbauteilen aus Rotguss sind auch Rohrverbinder aus Kunststoff bekannt. Diese haben jedoch, insbesondere wenn sie Winkel oder Abzweigungen aufweisen, den Nachteil, dass große Strömungsverluste des sie durchströmenden Fluids auftreten. Im Gussverfahren hergestellte Rohrverbinder aus Kunststoff werden im Stand der Technik mittels Spritzgießen in einem Teil gegossen. Um Rohrleitungen zu realisieren, die nicht in einer Richtung senkrecht zur Gussform entformt werden können, werden während des Gießens Schieber eingesetzt, die in Richtung der Längsachse der Rohrleitung entformt werden.

Des Weiteren ist bekannt, Werkstücke aus Kunststoff in zwei Teilen zu gießen.

Die EP 2 420 629 A1 offenbart ein Kunststoffgehäuse bestehend aus zwei schalenförmigen Einzelteilen, die im Druckgussverfahren hergestellt werden und die eine trinkwasserführende Funktionseinheit umschließen. Dabei kommt das Gehäuse selbst nicht in Kontakt mit dem die Funktionseinheit durchströmenden Fluid.

In der WO 2011/066612 A1 wird ein System von Komponenten zur Fluidleitung in einer Klimaanlage offenbart. Die Komponenten können dabei aus Kunststoff ausgebildete und verbindbare Gehäusehälften aufweisen.

Ausgehend von diesem Stand der Technik liegt der vorliegenden Erfindung die Aufgabe zugrunde einen strömungsoptimierten Rohrverbinder aus Kunststoff anzugeben.

Diese Aufgabe wird dadurch gelöst, dass der erste Gehäuseteil im Kreuzungsbereich ein Rohrleitungssegment der ersten Rohrleitung aufweist und dass die mindestens eine weitere Rohrleitung im Kreuzungsbereich eine Rampe aufweist, die dazu geeignet ist, ein Fluid, welches die mindestens eine weitere Rohrleitung durchströmt, über das Rohrleitungssegment der ersten Rohrleitung zu leiten.

Jeder Rohrleitungsabschnitt stellt dabei einen Teil des Querschnitts der Rohrleitung dar. In bevorzugter Weise ist ein Rohrleitungsabschnitt als Schale ausgebildet, die 50% des Querschnitts der Rohrleitung bildet.

Die mindestens eine Rohrleitung des Rohrverbinders kann beispielsweise als gerade Verbindung oder als Rohrbogen oder als T-Stück ausgebildet sein.

Es wurde erkannt, dass eine Rohrleitung im Spritzgießverfahren aus einem Kunststoffgehäuse bestehend aus zwei Gehäuseteilen hergestellt werden kann und dass durch die Produktion des Rohrverbinders in mindestens zwei Gehäuseteilen, die in einem zweiten Arbeitsschritt zusammengefügt werden, ein komplexer Aufbau des Rohrverbinders realisiert werden kann.

Ein im Spritzgießverfahren hergestelltes Gehäuse aus Kunststoff ist einfach und günstig in der Herstellung. Zudem treten im Gegensatz zu Gehäusen, die in einem Teil im Spritzgießverfahren hergestellt werden, keine Probleme beim Entformen insbesondere von Teilen, die eine komplexe Struktur aufweisen, aus der Gussform auf.

Der untere Rohrleitungsabschnitt der mindestens einen Rohrleitung kann mindestens einen Eckbereich aufweisen, wobei in dem mindestens einen Eckbereich eine Ausrundung vorgesehen ist. Durch diese Ausrundung kann die Entstehung von Wirbeln der laminaren Strömung in der mindestens einen Rohrleitung reduziert und damit das Strömungsverhalten des Fluids innerhalb dieser Rohrleitung weiter optimiert werden.

Ebenso kann der obere Rohrleitungsabschnitt der mindestens einen Rohrleitung mindestens einen Eckbereich aufweisen, wobei in dem mindestens einen Eckbereich eine Ausrundung vorgesehen ist. Durch diese Ausrundung kann das Strömungsverhalten des Fluids innerhalb der ersten Rohrleitung weiter optimiert werden.

Das Ausbilden von Ausrundungen in einem Kunststoffrohrverbinder ist erstmalig mit einem erfindungsgemäßen Rohrverbinder möglich. Da auf den Einsatz von Schiebern zur Realisation von Rohrleitungen verzichtet werden kann, können auch komplexe Strukturen, die von der gleichmäßigen, beispielsweise zylindrischen Kontur eines Schiebers abweichen, realisiert werden. Insbesondere in strömungskritischen Eckbereichen kann von der bisherigen Ausgestaltung der Kanten oder Ecken abgewichen werden.

Die mindestens zwei Gehäuseteile des erfindungsgemäßen Gehäuses werden dauerhaft mittels Kleben oder Schweißen zusammengefügt. Insbesondere Ultraschallschweißen, Vibrationsschweißen, Heizelementschweißen, Laserschweißen oder Infrarotschweißen sind Methoden, die für diese Zwecke geeignet sind. Jede weitere gängige Fügemethode für Kunststoffteile kann für diese Zwecke ebenfalls genutzt werden. Nach dem Fügeprozess bilden der untere Rohrleitungsabschnitt des ersten Gehäuseteils und der obere Rohrleitungsabschnitt des zweiten Gehäuseteils zusammen die mindestens eine Rohrleitung.

Neben der mindestens einen Rohrleitung ist eine weitere Rohrleitung vorgesehen. Hierdurch kann der erfindungsgemäße Rohrverbinder platzsparend in ein Rohrleitungssystem, in dem die Rohre dicht nebeneinander verlaufen, eingebaut werden. Insbesondere Heizungskörperanschlüsse und Fußbodenheizungsrohre weisen oft einen geringen Abstand der einzelnen Rohre auf.

Der untere und/oder der obere Rohrleitungsabschnitt der mindestens einen weiteren Rohrleitung weisen mindestens einen Eckbereich auf, wobei in dem mindestens einen Eckbereich eine Ausrundung vorgesehen ist. Die mindestens eine weitere Rohrleitung kann hierzu beispielsweise als Rohrbogen oder als T-Stück ausgebildet sein.

Durch das Ausbilden einer Ausrundung in einem Eckbereich des unteren und/oder oberen Rohrleitungsabschnitts der mindestens einen weiteren Rohrleitung kann der Strömungswiderstand des Fluids, das die mindestens eine weitere Rohrleitung durchströmt, ebenfalls weiter reduziert werden.

Beim erfindungsgemäßen Rohrverbinder ist vorgesehen, dass die erste Rohrleitung die mindestens eine weitere Rohrleitung in einem Kreuzungsbereich kreuzt. Neben einem unteren Rohrleitungsabschnitt der ersten Rohrleitung und einem unteren Rohrleitungsabschnitt der mindestens einen weiteren Rohrleitung weist der erste Gehäuseteil im Kreuzungsbereich ein Rohrleitungssegment der ersten Rohrleitung auf.
Darüber hinaus weist der zweite Gehäuseteil im Kreuzungsbereich eine Vertiefung auf. Im verbundenen Zustand der beiden Gehäuseteile wird dadurch ein Hohlraum über dem Rohrleitungssegment ausgebildet, so dass sichergestellt werden kann, dass das Fluid das Rohrleitungssegment der ersten Rohrleitung einseitig umfließen kann.

Die mindestens eine weitere Rohrleitung weist im Kreuzungsbereich eine Rampe auf, die dazu geeignet ist, ein Fluid, welches die mindestens eine weitere Rohrleitung durchströmt, über das Rohrleitungssegment der ersten Rohrleitung zu leiten. Die Rampe setzt dabei dem strömenden Fluid möglichst wenig Widerstand entgegen, so dass das Strömungsverhalten innerhalb des Kreuzungsbereichs weiter optimiert werden kann.

Bevorzugt ist in mindestens einem Bereich der Kanten der Rampe eine Ausrundung vorgesehen. Die Entstehung von Wirbeln der laminaren Strömung an den Kanten kann durch die Ausrundung weiter reduziert werden. Insofern trägt die Ausrundung mindestens einer Kante ebenfalls zur Reduzierung des Strömungswiderstandes bei.

In einer nächsten Ausführungsform liegt der Winkel im Kreuzungsbereich zwischen der ersten Rohrleitung und der mindestens einen weiteren Rohrleitung zwischen 45° und 135°. Vorzugsweise beträgt der Winkel 90°. Insbesondere wenn der Winkel zwischen der ersten und der mindestens einen weiteren Rohrleitung 90° beträgt, kann der Rohrverbinder einfach in einem Leitungssystem verbaut werden.

Der Kreuzungsbereich kann so ausgestaltet sein, dass keine oder nur geringfügige Querschnittsänderungen in beiden Rohrleitungen auftreten. Falls es doch zu einer Querschnittsveränderung kommen sollte, beträgt die Querschnittsänderung der ersten Rohrleitung im Kreuzungsbereich bevorzugt weniger als 20 %, insbesondere weniger als 10 %. Hierdurch wird sichergestellt, dass das Strömungsverhalten des Fluids beispielsweise durch eine Verengung des Strömungsquerschnittes nicht zu stark beeinflusst wird. Somit kann das Fluid gleichmäßig durch die erste Rohrleitung strömen.

Ebenso kann die Querschnittsänderung der mindestens einen weiteren Rohrleitung im Kreuzungsbereich weniger als 20 %, insbesondere weniger als 10 %. Durch das Umfließen des Rohrleitungssegments der ersten Rohrleitung ändert sich die Querschnittsform des Fluids, dass die zweite Rohrleitung durchströmt, nur geringfügig.

Wenn der Querschnitt der mindestens einen weiteren Rohrleitung im Kreuzungsbereich um bis zu 20%, bevorzugt weniger bis zu 10% verringert ist, kann auch eine geringe Aufbauhöhe des Rohrverbinders garantiert werden. Folglich kann der erfindungsgemäße Rohrverbinder besonders einfach in Rohrleitungssysteme im Fußboden oder in der Wand, insbesondere an Stellen an denen sich Leitungen kreuzen, eingebaut werden.

Die mindestens eine weitere Rohrleitung weist in einer nächsten Ausführungsform mindestens zwei Anschlüsse für die Verbindung des Rohrverbinders mit mindestens zwei weiteren Rohrleitungen auf. Diese Anschlüsse können als Pressverbinder oder als Gewindeverschraubung ausgebildet sein. Auch jede andere Art der Verbindung zweier Rohre, wie Flansche oder Muffen, kann für den Anschluss an weitere Rohrleitungen vorgesehen sein.

Ein Rohrverbinder gemäß einer der zuvor beschriebenen Ausführungsformen wird bevorzugt in einem Trinkwasser-, Heizungs- oder Kühlsystem verwendet.

Es gibt nun viele Möglichkeiten den erfindungsgemäßen Rohrverbinder auszugestalten. Hierzu wird einerseits auf die dem Patentanspruch 1 nachgeordneten Patentansprüche verwiesen, zusätzlich soll der erfindungsgemäße Rohrverbinder anhand der folgenden Ausführungsbeispiele näher erläutert werden. Es wird auf die beigefügte Zeichnung Bezug genommen.

In der Zeichnung zeigen
- Fig. 1: ein Rohrverbinder, wobei eine erste Rohrleitung als gerade Rohrleitung ausgebildet ist,
- Fig. 2a: ein erstes Gehäuseteil eines Rohrverbinders,
- Fig. 2b: ein zweites Gehäuseteil eines Rohrverbinders,
- Fig. 3: ein erstes Gehäuseteil eines Rohrverbinders, wobei eine erste Rohrleitung als Rohrbogen ausgebildet ist,
- Fig. 4: ein erstes Gehäuseteil eines Rohrverbinders, wobei eine erste Rohrleitung als T-Stück ausgebildet ist,
- Fig. 5a: ein erstes Gehäuseteil eines ersten Ausführungsbeispiels eines erfindungsgemäßen Rohrverbinders, wobei eine erste und eine weitere Rohrleitung als gerade Rohrleitungen ausgebildet sind,
- Fig. 5b: ein zweites Gehäuseteil des ersten Ausführungsbeispiels eines erfindungsgemäßen Rohrverbinders,
- Fig. 6a: ein erstes Gehäuseteil eines zweiten Ausführungsbeispiels eines erfindungsgemäßen Rohrverbinders, wobei eine erste und eine weitere Rohrleitung als T-Stück ausgebildet sind,
- Fig. 6b: ein zweites Gehäuseteil des zweiten Ausführungsbeispiels und
- Fig. 7: das zweite Ausführungsbeispiel eines erfindungsgemäßen Rohrverbinders, wobei die beiden Gehäuseteile der Fig. 6a und 6b zusammengefügt sind.

Im Folgenden werden einfach gestrichene Bezugszeichen für die Zugehörigkeit eines Rohrleitungsabschnitts zu einem ersten Gehäuseteil und zweifach gestrichene Bezugszeichen für die Zugehörigkeit eines Rohrleitungsabschnitts zu einem zweiten Gehäuseteil verwendet.

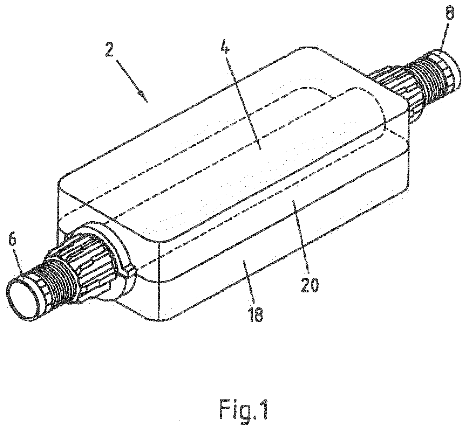

Fig. 1 zeigt einen Rohrverbinders mit einem Gehäuse 2 und mit einer mit einem Fluid durchströmbaren Rohrleitung 4. Das Gehäuse 2 weist einen ersten Gehäuseteil 18 und einen zweiten Gehäuseteil 20 auf, wobei die beiden Gehäuseteile 18 und 20 durch Kleben oder Schweißen zusammengefügt sind. Die Rohrleitung 4, die aus den beiden Gehäuseteilen 18 und 20 gebildet wird, ist als gerade Rohrleitung 12 ausgebildet. An den Enden der Rohrleitung 4 dienen Anschlüsse 6 und 8 der Verbindung der Rohrleitung 4 mit weiteren Rohrleitungen, die hier nicht dargestellt sind. Diese Anschlüsse können beispielsweise als Pressverbinder oder als Gewindeverschraubung ausgebildet sein. Auch jede andere Art der Verbindung zweier Rohre, wie Flansche oder Muffen, kann für den Anschluss an weitere Rohrleitungen vorgesehen sein.

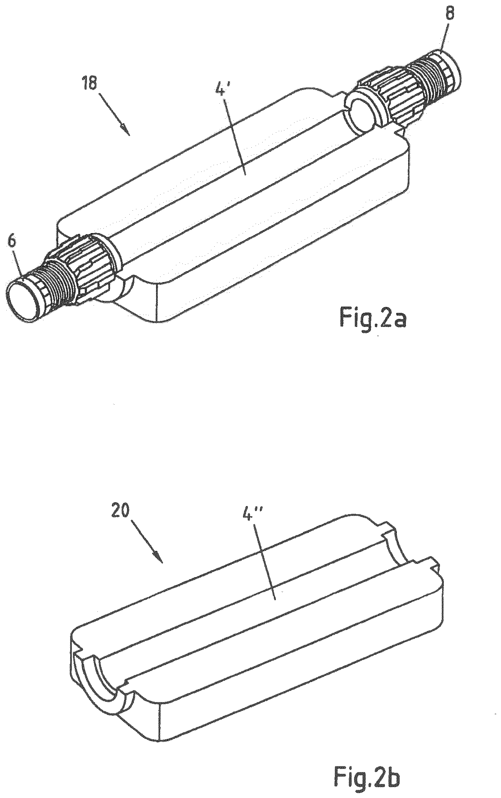

Fig. 2a zeigt einen ersten Gehäuseteil 18 eines Rohrverbinders. Der erste Gehäuseteil 18 weist einen unteren Rohrleitungsabschnitt 4' auf, wobei an den Enden des unteren Rohrleitungsabschnittes 4' Anschlüsse 6 und 8 für die Verbindung mit weiteren Rohrleitungen, die hier nicht dargestellt sind, vorgesehen sind. Der untere Rohrleitungsabschnitt 4' ist als gerader Rohrleitungsabschnitt ausgebildet.

Fig. 2b zeigt einen zweiten Gehäuseteil 20 eines Rohrverbinders. Der zweite Gehäuseteil 20 weist einen oberen Rohrleitungsabschnitt 4" auf. Auch dieser obere Rohrleitungsabschnitt 4" ist als gerader Rohrleitungsabschnit ausgebildet.

Die beiden Gehäuseteile 18 und 20 der Fig. 2a und 2b werden nun so zusammengefügt, dass der untere Rohrleitungsabschnitt 4' und der obere Rohrleitungsabschnitt 4" die Rohrleitung 4 bilden. Die Rohrleitungsabschnitte 4' und 4" bilden jeweils einen Teil des Querschnitts der Rohrleitung 4.

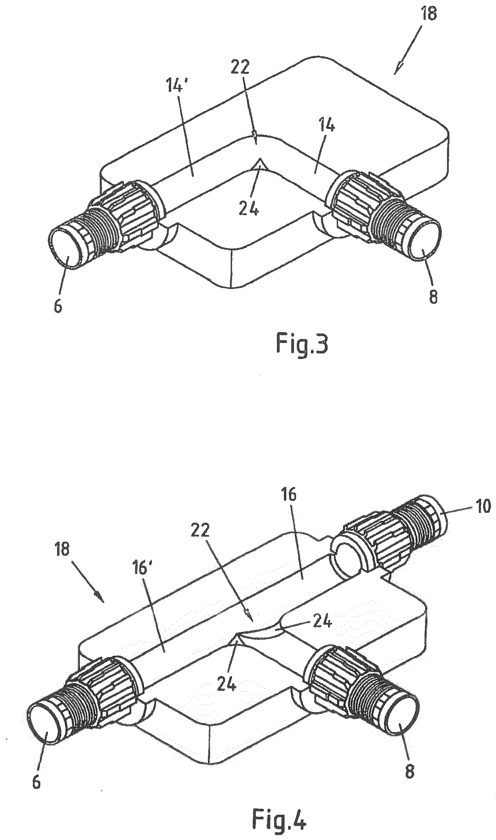

Fig. 3 zeigt einen ersten Gehäuseteil 18 eines Rohrverbinders mit einem unteren Rohrleitungsabschnitt 14' einer ersten Rohrleitung 14. Die Rohrleitung 14 ist in diesem Ausführungsbeispiel als Rohrbogen ausgebildet. Der erste Gehäuseteil 18 weist einen unteren Rohrleitungsabschnitt 14' des Rohrbogens 14 und Anschlüsse 6 und 8 für die Verbindung des Rohrbogens 14 mit weiteren Rohrleitungen auf. In einem Eckbereich 22 des unteren Rohrleitungsabschnitts 14' des Rohrbogens 14 ist eine Ausrundung 24 vorgesehen, die das Strömungsverhalten des Fluids, das den Rohrbogen 14 durchströmt, optimiert.

Ein zweiter Gehäuseteil, der hier nicht dargestellt ist, weist einen entsprechenden oberen Rohrleitungsabschnitt (ensprechend hier mit 14" bezeichnet) des Rohrbogens auf, so dass durch das Zusammenfügen der beiden Gehäuseteile der Rohrbogen 14 gebildet wird.

Fig. 4 zeigt einen ersten Gehäuseteil 18 eines Rohrverbinders, wobei die Rohrleitung 16 als T-Stück ausgebildet ist. Der erste Gehäuseteil 18 weist einen unteren Rohrleitungsabschnitt 16' und Anschlüsse 6, 8 und 10 für die Verbindung mit weiteren Rohrleitungen auf. In Eckbereichen 22 des unteren Rohrleitungsabschnitts 16' sind Ausrundungen 24 vorgesehen, die das Entstehen von Störungen der laminaren Strömung des Fluids, das die Rohrleitung 16 durchströmt, reduzieren und so das Strömungsverhalten innerhalb der Rohrleitung 16 optimieren.

Entsprechend ausgebildet ist ein zweiter Gehäuseteil, der hier nicht gezeigt ist. Der zweite Gehäuseteil weist einen oberen Rohrleitungsabschnitt (hier entsprechend mit 16") auf, der passend zum zuvor beschriebenen unteren Rohrleitungsabschnitt 16' als T-Stück ausgebildet ist. Durch das Zusammenfügen der beiden Gehäuseteile wird die Rohrleitung 16 gebildet.

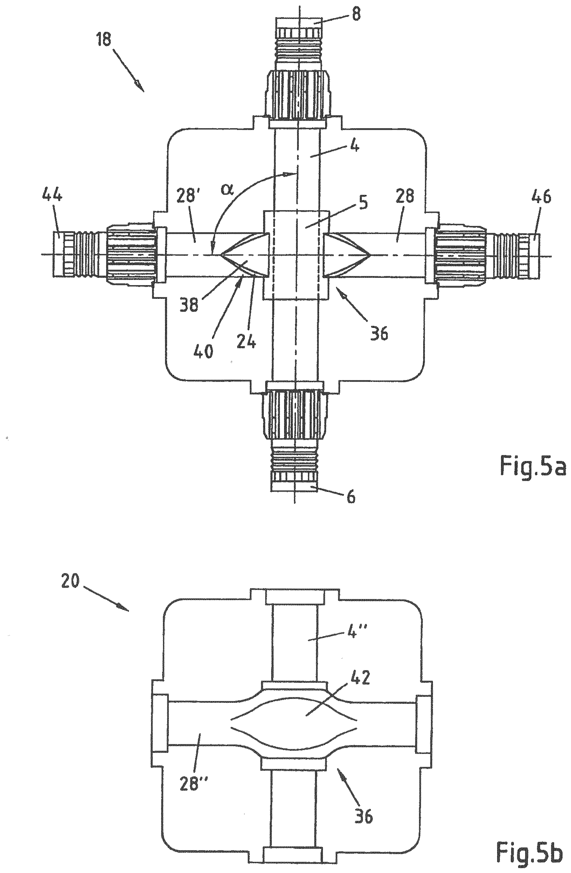

Ein erster Gehäuseteil 18 eines ersten Ausführungsbeispiels zeigt Fig. 5a. Neben einer ersten Rohrleitung 4 ist eine weitere Rohrleitung 28 vorgesehen, wobei beide Rohrleitungen 4 und 28 als gerade Rohrleitungen ausgebildet sind, die sich in einem Kreuzungsbereich 36 kreuzen. Der erste Gehäuseteil 18 weist einen unteren Rohrleitungsabschnitt 12' der ersten Rohrleitung 12 und einen unteren Rohrleitungsabschnitt 28' der zweiten Rohrleitung 28 auf. Der Winkel a zwischen dem unteren Rohrleitungsabschnitt 12' und dem unteren Rohrleitungsabschnitt 28' beträgt 90°. Im Kreuzungsbereich 36 weist der erste Gehäuseteil 18 ein Rohrleitungssegment 5 der ersten Rohrleitung 4 auf. Um das die zweite Rohrleitung 28 durchströmende Fluid über das Rohrleitungssegment 5 zu leiten, ist im Kreuzungsbereich 36 eine Rampe 38 vorgesehen, die ein einseitiges Umfließen des Rohrleitungssegmentes 5 der ersten Rohrleitung 4 auf. Um das die zweite Rohrleitung 28 durchströmende Fluid über das Rohrleitungssegment 5 zu leiten, ist im Kreuzungsbereich 36 eine Rampe 38 vorgesehen, die ein einseitiges Umfließen des Rohrleitungssegmentes 5 der ersten Rohrleitung 4 ermöglicht.

Um den Strömungswiderstand zu minimieren, sind im Bereich der Kanten 40 der Rampe 38 Ausrundungen 24 vorgesehen. Zudem weisen die beiden unteren Rohrleitungsabschnitte 4' und 28' an den Enden Anschlüsse 6, 8, 44 und 46 für die Verbindung des Rohrverbinders mit weiteren Rohrleitungen auf.

Fig. 5b zeigt einen zweiten Gehäuseteil 20 des zuvor beschriebenen Ausführungsbeispiels. Der zweite Gehäuseteil 20 weist einen oberen Rohrleitungsabschnitt 4" der ersten Rohrleitung 4 und einen oberen Rohrleitungsabschnitt 28" der zweiten Rohrleitung 28 auf, wobei der obere Rohrleitungsabschnitt 4" der ersten Rohrleitung 4 den oberen Rohrleitungsabschnitt 28" der zweiten Rohrleitung 28 in einem Kreuzungsbereich 36 kreuzt. Im Kreuzungsbereich 36 weist der zweite Gehäuseteil 20 eine Vertiefung 42 auf. Im zusammengefügten Zustand bilden die Gehäuseteile 18, 20 der Fig. 5a und 5b die Rohrleitungen 4 und 28.

Durch die Vertiefung 42 im Kreuzungsbereich 36 des zweiten Gehäuseteils 20 kann sichergestellt werden, dass das Fluid, das die zweite Rohrleitung 28 durchströmt, das Rohrleitungssegment 5 der ersten Rohrleitung 4 umfließen kann, wobei der Strömungsquerschnitt erhalten bleibt oder nur geringfügig um 20 %, vorzugsweise um 10 %, verringert sein kann.

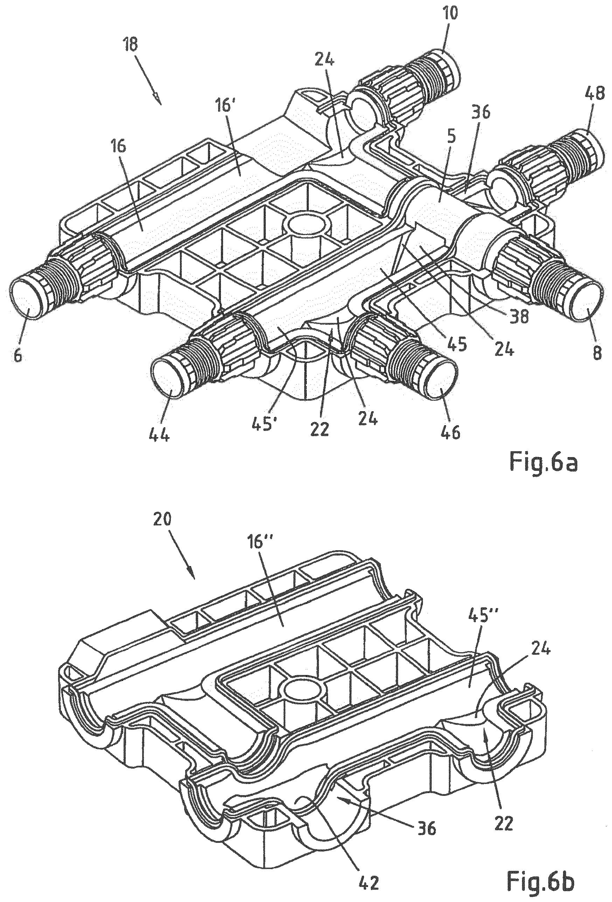

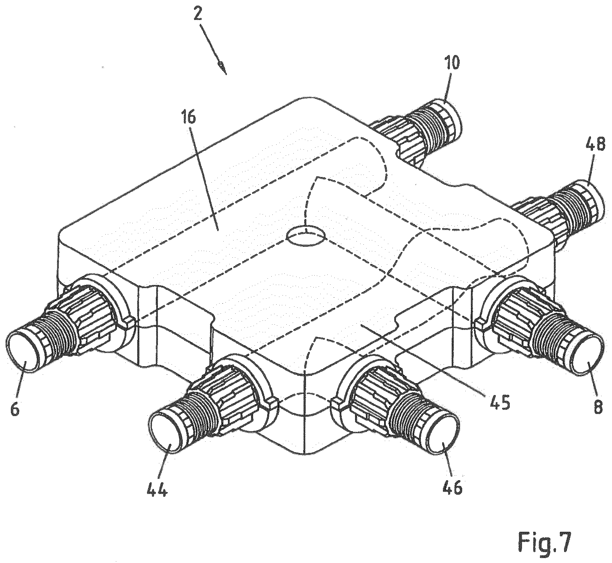

Die Fig. 6a und b zeigen einen ersten Gehäuseteil 18 und einen zweiten Gehäuseteil 20 eines zweiten Ausführungsbeispiels eines erfindungsgemäßen Rohrverbinders, die zusammengefügt ein in Fig. 7 dargestelltes Gehäuse 2 bilden. In diesem Ausführungsbeispiel sind zwei Rohrleitungen 16 und 45 vorgesehen, die beide als T-Stück ausgebildet sind.

Fig. 6a zeigt den ersten Gehäuseteil 18 mit unteren Rohrleitungsabschnitten 16' und 45' der Rohrleitungen 16 und 45. In den Eckbereichen 22 der unteren Rohrleitungsabschnitte 16' und 45' sind Ausrundungen 24 vorgesehen, die den Strömungswiderstand für das die Rohrleitungen 16 und 45 durchströmende Fluid minimieren. In einem Kreuzungsbereich 36 kreuzt der untere Rohrleitungsabschnitt 16' den unteren Rohrleitungsabschnitt 45'. Der Winkel zwischen den sich kreuzenden Rohrleitungsabschnitten beträgt 90°.

Im Kreuzungsbereich 36 weist der erste Gehäuseteil 18 ein Rohrleitungssegment 5 der ersten Rohrleitung 16 auf. Damit das die zweite Rohrleitung 45 durchströmende Fluid im Kreuzungsbereich 36 das Rohrleitungssegment 5 der ersten Rohrleitung 16 optimal umfließen kann, ist eine Rampe 38 vorgesehen, die das Fluid über das Rohrleitungssegment 5 leitet. Um den Strömungswiderstand zu minimieren, sind im Bereich der Kanten 40 der Rampe 38 Ausrundungen 24 vorgesehen. An den Enden der unteren Rohrleitungsabschnitte 16' und 45' weist der erste Gehäuseteil 18 Anschlüsse 6, 8, 10, 44, 46 und 48 für die Verbindung mit weiteren Rohrleitungen auf.

Fig. 6b zeigt einen zweiten Gehäuseteil 20 des zweiten Ausführungsbeispiels des erfindungsgemäßen Rohrverbinders. Der zweite Gehäuseteil 20 weist einen oberen Rohrleitungsabschnitt 16" der ersten Rohrleitung 16 und einen oberen Rohrleitungsabschnitt 45" der zweiten Rohrleitung 45 auf, wobei der obere Rohrleitungsabschnitt 16" den oberen Rohrleitungsabschnitt 45" in einem Kreuzungsbereich 36 kreuzt. In Eckbereichen 22 der oberen Rohrleitungsabschnitte 16" und 45" sind Ausrundungen 24 vorgesehen, die das Strömungsverhalten des Fluids, das die Rohrleitung 16 und 45 durchströmt, weiter optimieren. Im Kreuzungsbereich 36 der beiden Rohrleitungsabschnitte 16" und 45" weist der zweite Gehäuseteil 20 eine Vertiefung 42 auf. Im zusammengefügten Zustand bilden die beiden Gehäuseteile 18 und 20 der Fig. 6a und 6b die Rohrleitungen 16 und 45.

Durch eine Vertiefung 42 des zweiten Gehäuseteils 20 im Kreuzungsbereich 36 kann sichergestellt werden, dass das Fluid, das die Rohrleitung 45 durchströmt, das Rohrsegment 5 der ersten Rohrleitung 16 umfließen kann, wobei der Strömungsquerschnitt nur geringen Verringerung von weniger als 20 %, vorzugsweise weniger als 10 %, erhalten bleibt.

Fig. 7 zeigt das Gehäuse 2 des zweiten Ausführungsbeispiels, wobei die beiden Gehäuseteile 18, 20 der Fig. 6a und 6b zusammengefügt sind. Der gezeigte Rohrverbinder weist an den Enden der Rohrleitungen 16 und 45 Anschlüsse 6, 8, 10, 44, 46 und 48 für die Verbindung mit weiteren Rohrleitungen, die hier nicht dargestellt sind, auf. Dieses Ausführungsbeispiel eines erfindungsgemäßen Rohrverbinders lässt sich aufgrund seiner geringen Aufbauhöhe besonders gut in die Verlegung von Rohren im Fußboden oder in der Wand integrieren.

## Patentansprüche

1. Rohrverbinder für eine Hausinstallation
- mit einem Gehäuse (2) und
- mit mindestens einer mit einem Fluid durchströmbaren Rohrleitung (4, 14, 16, 28, 45),
- wobei das Gehäuse (2) aus Kunststoff besteht,
- wobei an den Enden der mindestens einen Rohrleitung (4, 14, 16, 28, 45) Anschlüsse (6, 8, 10, 44, 46, 48) für die Verbindung mit weiteren Rohrleitungen vorgesehen sind,
- wobei das Gehäuse (2) mindestens zwei Gehäuseteile (18, 20) aufweist,
- wobei der erste Gehäuseteil (18) einen unteren Rohrleitungsabschnitt (4', 14', 16', 28', 45') der mindestens einen Rohrleitung (4, 14, 16, 28, 45) aufweist, und
- wobei der zweite Gehäuseteil (20) einen oberen Rohrleitungsabschnitt (4'', 14'', 16", 28", 45") der mindestens einen Rohrleitung (4, 14, 16, 28, 45) aufweist,
- wobei der untere Rohrleitungsabschnitt (4', 14', 16', 28', 45') und/oder der obere Rohrleitungsabschnitt (4", 14'', 16'', 28'', 45") der mindestens einen Rohrleitung (4, 14, 16, 28, 45) mindestens einen Eckbereich (22) aufweist,
- wobei in dem mindestens einen Eckbereich (22) eine Ausrundung (24) vorgesehen ist,
- wobei mindestens eine weitere Rohrleitung (28, 45) vorgesehen ist und
- wobei die erste Rohrleitung (4, 16) die mindestens eine weitere Rohrleitung (28, 45) in einem Kreuzungsbereich (36) kreuzt,
**dadurch gekennzeichnet,**
- **dass** der erste Gehäuseteil (18) im Kreuzungsbereich (36) ein Rohrleitungssegment (5) der ersten Rohrleitung (4, 16) aufweist und
- **dass** die mindestens eine weitere Rohrleitung (28, 45) im Kreuzungsbereich (36) eine Rampe (38) aufweist, die dazu geeignet ist, ein Fluid, welches die mindestens eine weitere Rohrleitung (28, 45) durchströmt, über das Rohrleitungssegment (5) der ersten Rohrleitung (4, 16) zu leiten.

2. Rohrverbinder nach Anspruch 1,
**dadurch gekennzeichnet, dass**
die Gehäuseteils (18, 20) mittels Kleben oder Schweißen, insbesondere Ultraschallschweißen, Vibrationsschweißen, Heizelementschweißen, Laserschweißen oder Infrarotschweißen, zusammengefügt sind.

3. Rohrverbinder nach Anspruch 1 oder 2,
**dadurch gekennzeichnet, dass**
der untere Rohrleitungsabschnitt (28', 45') der mindestens einen weiteren Rohrleitung (28, 45) mindestens ein Eckbereich (22) aufweist und dass in dem mindestens einen Eckbereich (22) eine Ausrundung (24) vorgesehen ist.

4. Rohrverbinder nach einem der Ansprüche 1 bis 3,
**dadurch gekennzeichnet, dass**
der obere Rohrleitungsabschnitt (28'', 45") der mindestens einen weiteren Rohrleitung (28, 45) mindestens ein Eckbereich (22) aufweist und dass in dem mindestens einen Eckbereich (22) eine Ausrundung (24) vorgesehen ist.

5. Rohrverbinder nach einem der Ansprüche 1 bis 4,
**dadurch gekennzeichnet, dass**
der zweite Gehäuseteil (20) im Kreuzungsbereich (36) eine Vertiefung (42) aufweist.

6. Rohrverbinder nach einem der Ansprüche 1 bis 5,
**dadurch gekennzeichnet, dass**
in mindestens einem Bereich der Kanten (40) der Rampe (38) eine Ausrundung (24) vorgesehen ist.

7. Rohrverbinder nach einem der Ansprüche 1 bis 6,
**dadurch gekennzeichnet, dass**
der Winkel (α) zwischen der ersten Rohrleitung (4, 16) und der mindestens einen weiteren Rohrleitung (28, 45) im Kreuzungsbereich (36) 45° bis 135°, vorzugsweise 90°, beträgt.

8. Rohrverbinder nach einem der Ansprüche 1 bis 7,
**dadurch gekennzeichnet, dass**
die Querschnittsänderung der ersten Rohrleitung (4, 16) im Kreuzungsbereich (36) weniger als 20 %, insbesondere weniger als 10 %, beträgt.

9. Rohrverbinder nach einem der Ansprüche 1 bis 8,
**dadurch gekennzeichnet, dass**
die Querschnittsänderung der mindestens einen weiteren Rohrleitung (28, 45) im Kreuzungsbereich (36) weniger als 20 %, insbesondere weniger als 10 %, beträgt.

10. Rohrverbinder nach einem der Ansprüche 1 bis 9,
**dadurch gekennzeichnet, dass**
die mindestens eine weitere Rohrleitung (28, 45) mindestens zwei Anschlüsse (44, 46, 48) zum Verbinden des Rohrverbinders mit mindestens zwei weiteren Rohrleitungen aufweist.

11. verwendung des Rohrverbinders nach einem der Ansprüche 1 bis 10 in einem Trinkwasser-, Heizungs- oder Kühlsystem.

## Claims

1. Pipe connector for a domestic installation
- having a housing (2) and
- having at least one pipeline (4, 14, 16, 28, 45) which can be flown through with a fluid,
- wherein the housing (2) consists of plastic,
- wherein connections (6, 8, 10, 44, 46, 48) for the connection with further pipelines are provided at the ends of the at least one pipeline (4, 14, 16, 28, 45),
- wherein the housing (2) comprises at least two housing parts (18, 20),
- wherein the first housing part (18) comprises a lower pipeline section (4', 14', 16', 28', 45') of the at least one pipeline (4, 14, 16, 28, 45), and
- wherein the second housing part (20) comprises an upper pipeline section (4", 14", 16", 28", 45") of the at least one pipeline (4, 14, 16, 28, 45)
wherein the lower pipeline section (4', 14', 16', 28', 45') and/or the upper pipeline section (4", 14", 16", 28", 45") of the at least one pipeline (4, 14, 16, 28, 45) comprises at least one corner region (22),
wherein a fillet (24) is provided in the at least one corner region (22),
wherein at least one further pipeline (28, 45) is provided, and
wherein the first pipeline (4, 16) intersects the at least one further pipeline (28, 45) in an intersection region (36),
**characterised in that**
the first housing part (18) comprises a pipeline segment (5) of the first pipeline (4, 16) in the intersection region (36) and
**in that** the at least one further pipeline (28, 45) comprises a ramp (38) in the intersection region (36), which is suitable for directing a fluid, which flows through the at least one further pipeline (28, 45), over the pipeline segment (5) of the first pipeline (4, 16).

2. Pipe connector according to claim 1, **characterised in that** the housing parts (18, 20) are joined together by means of bonding or welding, in particular ultrasonic welding, vibration welding, heated tool welding, laser welding or infrared welding.

3. Pipe connector according to claim 1 or 2, **characterised in that** the lower pipeline section (28', 45') of the at least one further pipeline (28, 45) comprises at least one corner region (22) and. **in that** a fillet (24) is provided in the at least one corner region (22).

4. Pipe connector according to any one of claims 1 to 3, **characterised in that** the upper pipeline section (28", 45") of the at least one further pipeline (28, 45) comprises at least one corner region (22) and **in that** a fillet (24) is provided in the at least one corner region (22).

5. Pipe connector according to any one of claims 1 to 4, **characterised in that** the second housing part (20) comprises a depression (42) in the intersection region (36).

6. Pipe connector according to any one of claims 1 to 5, **characterised in that** a fillet (24) is provided in at least one region of the edges (40) of the ramp (38).

7. Pipe connector according to any one of claims 1 to 6, **characterised in that** the angle (α) between the first pipeline (4, 16) and the at least one further pipeline (28, 45) in the intersection region (36) is 45° to 135°, preferably 90°.

8. Pipe connector according to any one of claims 1 to 7, **characterised in that** the change in cross-section of the first pipeline (4, 16) in the intersection region (36) is less than 20%, in particular less than 10%.

9. Pipe connector according to any one of claims 1 to 8, **characterised in that** the change in cross-section of the at least one further pipeline (28, 45) in the intersection region (36) is less than 20%, in particular less than 10%.

10. Pipe connector according to any one of claims 1 to 9, **characterised in that** the at least one further pipeline (28, 45) comprises at least two connections (44, 46, 48) for connecting the pipe connector to at least two further pipelines.

11. Use of the pipe connector according to any one of claims 1 to 10 in a drinking water, heating or cooling system.

## Revendications

1. Raccordement de tuyaux pour une installation domestique,
- avec un boîtier (2) et
- avec au moins une conduite tubulaire (4, 14, 16, 28, 45), qui est traversée par un fluide,
- le boîtier (2) étant en matière synthétique,
- sachant que des raccords (6, 8, 10, 44, 46, 48), destinés au raccordement d'autres conduites tubulaires, sont prévus aux extrémités de la conduite tubulaire (4, 14, 16, 28, 45) au moins prévue,
- le boîtier (2) étant composé d'au moins deux parties de boîtier (18, 20),
- sachant que la première partie de boîtier (18) est dotée d'une section inférieure de conduite tubulaire (4', 14', 16', 28', 45') de la conduite tubulaire (4, 14, 16, 28, 45) au moins prévue, et
- la deuxième partie de boîtier (20) étant dotée d'une section supérieure de conduite tubulaire (4'', 14'', 16'', 28'', 45'') de la conduite tubulaire (4, 14, 16, 28, 45) au moins prévue,
- où la section inférieure de conduite tubulaire (4', 14', 16', 28', 45' et / ou la section supérieure de conduite tubulaire) (4", 14", 16", 28", 45") de la conduite tubulaire (4, 14, 16, 28, 45) au moins prévue est / sont dotée /s d'au moins une zone angulaire (22),
- où dans l'au moins une zone angulaire (22), est prévu un arrondissement (24)
- où l'on prévoit au moins une autre conduite tubulaire (28, 45),
- où la première conduite tubulaire (4, 16) croise l'au moins une autre conduite tubulaire (28, 45) dans une zone de croisement (36),
**caractérisé**
- **en ce que**, dans la région de croisement (36), la première partie de boîtier (18) est dotée d'un segment de conduite tubulaire (5) de la première conduite tubulaire (4, 16), et
- **en ce que** l'au moins une autre conduite tubulaire (28, 45) est dotée, dans la région de croisement (36), d'une rampe (38), qui, par l'intermédiaire du segment de conduite tubulaire (5) de la première conduite tubulaire (4, 16), est apte à conduire un fluide, qui passe à travers l'autre conduite tubulaire (28, 45) au moins prévue.

2. Raccordement de tuyaux selon la revendication 1,
**caractérisé en ce que** les parties de boîtier (18, 20) sont assemblées par collage ou soudage, en particulier par soudage par ultrasons, soudage par vibrations, soudage par plaque chauffage, soudage par laser ou soudage infrarouge.

3. Raccordement de tuyaux selon la revendication 1 ou 2, **caractérisé en ce que** la section inférieure de conduite tubulaire (28', 45') de l'autre conduite tubulaire (28, 45) au moins prévue est dotée d'au moins une zone angulaire (22) et qu'un arrondissement (24) est prévu dans l'au moins une zone angulaire (22).

4. Raccordement de tuyaux selon une des revendications 1 à 3,
**caractérisé en ce que** la section supérieure de conduite tubulaire (28", 45") de l'autre conduite tubulaire (28, 45) au moins prévue est dotée d'au moins une zone angulaire (22) et qu'un arrondissement (24) est prévu dans l'au moins une zone angulaire (22).

5. Raccordement de tuyaux selon une des revendications 1 à 4,
**caractérisé en ce que,** dans la région de croisement (36), la deuxième partie de boîtier (20) est dotée d'un creux (42).

6. Raccordement de tuyaux selon une des revendications 1 à 5,
**caractérisé en ce que,** dans au moins une région des bords (40) de la rampe (38), est prévu un arrondissement (24).

7. Raccordement de tuyaux selon l'une des revendications 1 à 6,
**caractérisé en ce que** l'angle (α), formé entre la première conduite tubulaire (4, 16) et l'autre conduite tubulaire (28, 45) au moins prévue, est de 45 ° à 135 °, de préférence de 90 °, dans la région de croisement (36).

8. Raccordement de tuyaux selon l'une des revendications 1 à 7,
**caractérisé en ce que,** dans la région de croisement (36), le changement de la section transversale de la première conduite tubulaire (4, 16) est inférieur à 20 %, en particulier inférieur à 10 %.

9. Raccordement de tuyaux selon l'une des revendications 1 à 8,
**caractérisé en ce que,** dans la région de croisement (36), le changement de la section transversale de l'autre conduite tubulaire (28, 45) au moins prévue est inférieur à 20 %, en particulier inférieur à 10 %.

10. Raccordement de tuyaux selon l'une des revendications 1 à 9,
**caractérisé en ce que** l'autre conduite tubulaire (28, 45) au moins prévue est dotée d'au moins deux raccords (44, 46, 48) qui sont destinés à relier le raccordement de tuyaux à au moins deux autres conduites tubulaires.

11. Utilisation du raccordement de tuyaux selon l'une des revendications 1 à 10 dans un système d'eau potable, de chauffage ou de refroidissement.
